# EUROPÄISCHE PATENTSCHRIFT

(11) **EP 1 934 070 B1**
(45) Veröffentlichungstag und Bekanntmachung des Hinweises auf die Patenterteilung: **25.05.2011**
(21) Anmeldenummer: 06777113.9
(22) Anmeldetag: 29.08.2006
(51) Int. Cl.: B60N 2/06

(54) **VERSTELLEINRICHTUNG FÜR EINEN FAHRZEUGSITZ**
ADJUSTING DEVICE FOR A MOTOR VEHICLE SEAT
DISPOSITIF DE REGLAGE POUR SIEGE DE VEHICULE

(30) Priorität: 30.09.2005 DE 102005047452
(43) Veröffentlichungstag der Anmeldung: 25.06.2008
(73) Patentinhaber: Johnson Controls GmbH, 51399 Burscheid (DE)
(72) Erfinder: SCHMALE, Uwe, 42499 Hückeswagen (DE); OTTO, Jürgen, 51399 Burscheid (DE)
(74) Vertreter: Liedtke, Markus
(86) Internationale Anmeldenummer: PCT/EP2006/008450
(87) Internationale Veröffentlichungsnummer: WO 2007/039028

(56) Entgegenhaltungen:
- EP-A- 1 316 465
- DE-A1- 3 022 344
- DE-A1- 10 149 546
- US-A- 1 865 185
- US-A- 5 782 138

## Beschreibung

Die Erfindung betrifft eine Verstelleinrichtung für einen Fahrzeugsitz, der eine Blechstruktur mit mindestens einer Ausnehmung aufweist, welche mit einem Riegelelement in formschlüssigen Eingriff bringbar ist.

### Stand der Technik

Aus der deutschen Patentanmeldung DE 103 46 147 A1 ist eine Verstelleinrichtung zur Längsverstellung eines Fahrzeugsitzes entlang einer Schiene bekannt. Sie besteht aus einer Anordnung von Verstellelementen, welche in der Oberschiene des Sitzes angeordnet sind und riegelartige Fortsätze aufweisen, die wechselweise in formschlüssigen Eingriff mit in der Unterschiene eingelassenen Ausnehmungen gelangen und dabei eine entlang der Schiene gerichtete Bewegungskomponente erfahren. Hierdurch wird die Oberschiene bei Drehung von Exzentern, welche die Verstellelemente antreiben, relativ zur Unterschiene stufenlos verschoben. Die hierzu erforderlich Kräfte werden durch Kontakt der Fortsätze mit der Unterschiene im Bereich der Ausnehmung übertragen, ebenso Kräfte, die beim Betreiben des Fahrzeugs auftreten. Besonders hohe Kräfte treten naturgemäß im Falle eines Unfalls auf. Auch bei diesem Ereignis darf der riegelnde Eingriff der Fortsätze in den Ausnehmungen nicht versagen.

Aus dem US Patent 5,782,138 ist eine gattungsgemäße Verstelleinrichtung bekannt.

### Aufgabe

Der Erfindung liegt die Aufgabe zugrunde, die Sicherheit gattungsgemäßer Verstelleinrichtungen mit einfachen Mitteln zu verbessern.

### Lösung

Die Aufgabe wird erfindungsgemäß durch die in Anspruch 1 angegebene Merkmalskombination gelöst. Die Ausnehmungen sind mit einem zumindest partiell umlaufenden Wulst versehen ist. Durch diesen Wulst, der sich zumindest im Kontaktbereich zwischen Riegelelement und Blechstruktur erstreckt, werden die Flächenpressungen reduziert und die Gefahr eines Aufschälens der Ausnehmung verringert. Dies führt zu einer Erhöhung der vom Riegelelement auf die Blechstruktur übertragbaren Kräfte.

Der Wulst umgibt die Ausnehmung mit Vorteil vollumfänglich und erstreckt sich erfindungsgemäß über beide Flächenseiten der vorzugsweise aus Stahl bestehenden Blechstruktur. Beim Ausstanzen der Ausnehmungen aus der Blechstruktur lässt sich der Wulst durch plastische Verformung bei erheblicher Wirkung besonders einfach erzeugen, wenn die Wanddicke im Bereich des Wulstes das 1,1fache bis 1,5fache, insbesondere etwa das 1,3fache der Wanddicke der den Wulst umgebenden Bereiche der Blechstruktur und die Breite des Wulstes das 0,25fache bis 1,0fache, insbesondere etwa das 0,5fache der Wanddicke der den Wulst umgebenden Bereiche der Blechstruktur beträgt.

Die Ausnehmung weist vorzugsweise eine im Wesentlichen rechteckigen oder ovalen Kontur auf, wobei die Ecken der rechteckigen Ausnehmung mit großzügigen Radien versehen sind. Durch diese Ausbildungen werden Spannungsspitzen bei einer Belastung der Verstelleinrichtung reduziert.

Die Blechstruktur der Verstelleinrichtung weist erfindungsgemäß eine insbesondere lineare Folge von Ausnehmungen mit jeweils einem zumindest partiell umlaufenden Wulst auf, die ein Verriegeln des Fahrzeugsitzes in unterschiedlichen Stellungen ermöglichen. Da der Abstand zwischen den Ausnehmungen vorzugsweise gering ausgeführt wird, um die Lageveränderung des Fahrzeugsitzes zwischen zwei benachbarten Verriegelungsposition klein zu halten, kommt der Festigkeit der die Ausnehmungen verbindenden Bereiche der Blechstruktur eine besondere Bedeutung zu. Um eine besondere gleichmäßige Ausbildung der Wülste zu erzielen, kann vorgesehen werden, dass jeder Wulst einer Ausnehmung gegenüber dem Wulst der benachbarten Ausnehmung durch einen Bereich verringerter Wanddicke getrennt ist.

Die Blechstruktur stellt mit Vorteil den Teil einer Sitzschiene, insbesondere einer Sitzunterschiene, dar, welche zur linearen Verstellung eines Fahrzeugsitzes geeignet ist, beispielsweise zur Verschiebung des Sitzes in oder gegen die Fahrtrichtung.

### Figuren

Die Figuren stellen beispielhaft und schematisch verschiedene Ausführungen der Erfindung dar.

Es zeigen:
- Fig. 1: die perspektivische Ansicht einer erfindungsgemäß ausgebildeten Unterschiene eines Fahrzeugsitzes,
- Fig. 2: einen Längsschnitt durch die Unterschiene nach Fig. 1 mit in Eingriff befindlichem Verriegelungselement,
- Fig. 3: eine Aufsicht auf eine Ausnehmung nach einer ersten Ausbildung der Erfindung,
- Fig. 4: die Aufsicht auf eine anders gestaltete Ausnehmung,
- Fig. 5: einen Schnitt durch ein zum Erzeugen einer erfindungs- gemäßen Blechstruktur geeignetes Werkzeug.

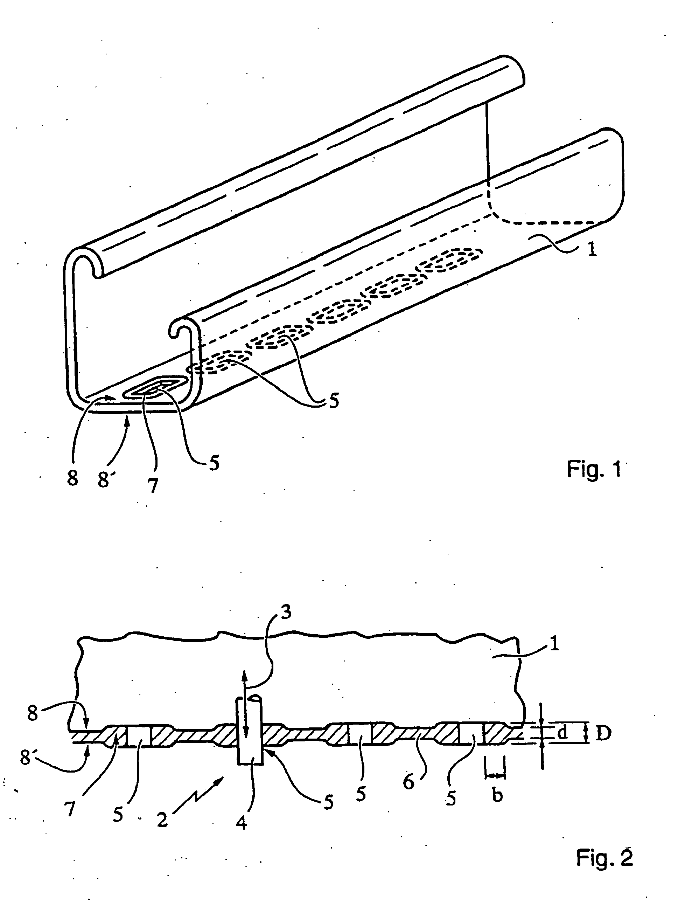

Die in Fig. 1 und 2 dargestellte Unterschiene 1 ist Teil einer Verstelleinrichtung 2 zur Längsverstellung eines Fahrzeugsitzes. Die Verstelleinrichtung 2 weist ein bolzenartiges, in Richtung des Pfeils 3 verlagerbares Riegelelement 4 auf, das mit der nicht gezeigten Oberschiene der Verstelleinrichtung 2 verbunden ist. Zur einstellbaren Verschiebung der Oberschiene gegenüber der Unterschiene 1 wird das Riegelelement 4 in eine Stellung gebracht, in der es sich außer Eingriff mit der Unterschiene 1 befindet. Zur Festlegung der eingestellten Sitzposition kann das Riegelelement 4 in formschlüssigen Eingriff mit einer von mehreren gleichartigen Ausnehmungen 5 gebracht werden, die in linearer, äquidistanter Anordnung entlang der Längsachse der Unterschiene 1 in deren Blechstruktur 6 eingestanzt sind.

Jede Ausnehmung 5 ist vollumfänglich von einem Wulst 7 umgeben, der sich über beide Flächenseiten 8, 8' der Blechstruktur 6 erstreckt. Die Wanddicke D der Blechstruktur 6 im Bereich des Wulstes 7 beträgt etwa das 1,3fache der Wanddicke d jenseits des Wulstes 7, während die Breite b des Wulstes 7 etwa der halben Wanddicke d entspricht.

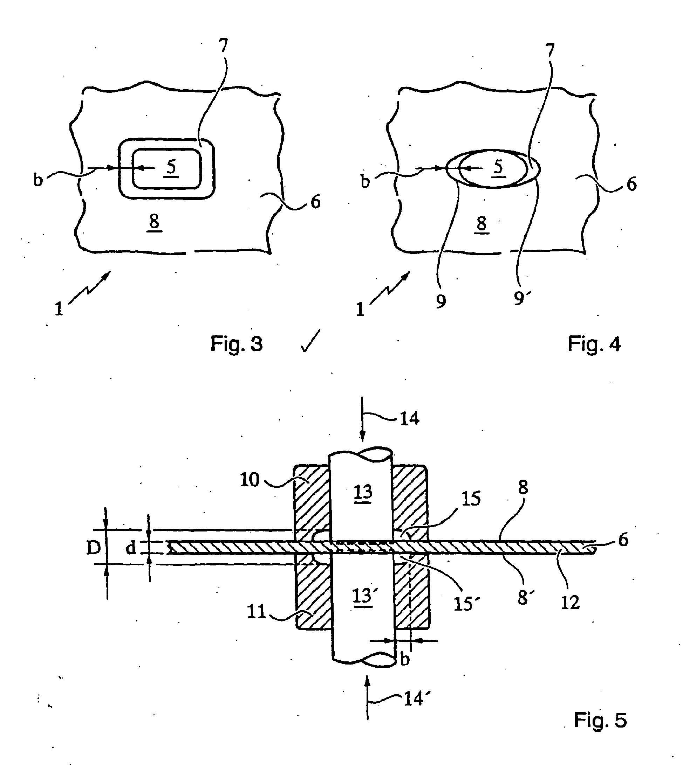

Wie aus den Fig. 3 ersichtlich, kann der Wulst 7 in im Wesentlichen konstanter Breite b um die Kontur einer rechteckigen Ausnehmung 5 umlaufen. Alternativ ist denkbar, den Wulst 7 nur partiell um die Ausnehmung herum anzuordnen, in Fig. 4 am Beispiel zweier sichelförmiger Wulstsegmente 9, 9', die an den höchstbelasteten Bereichen der Ausnehmung 5 ihr größte Breite b erreichen.

Ein zur Herstellung erfindungsgemäßer Verstelleinrichtungen 2 geeignetes Stanzwerkzeug besteht, wie in Fig. 5 dargestellt, aus einem Oberwerkzeug 10 und einem Unterwerkzeug 11, die auf jeweils eine Flächenseite 8, 8' des ebenen Blechzuschnitts 12 der Blechstruktur 6 aufgesetzt werden. Ober- und Unterwerkzeug 10, 11 sind mit Stanzstempeln 13, 13' ausgestattet, die in Richtung auf die Flächenseiten 8, 8' (Pfeile 14, 14') bewegbar sind und die Ausnehmung 5 aus dem Blechzuschnitt 12 stanzen. Bei diesem Vorgang wird Werkstoff des Blechzuschnitts 12 durch plastische Verformung in die Stanzstempel 13, 13' umgebende Nuten 15 gepresst, welche näherungsweise die Maße D, b des hierdurch erzeugten Wulstes 7 aufweisen. Der auf diese Weise mit Ausnehmungen 5 versehene Blechzuschnitt 12 wird nachfolgend durch Kanten oder Rollen zu einem Schienenprofil geformt.

### Bezugszeichen

- 1: Unterschiene
- 2: Verstelleinrichtung
- 3: Pfeil (Verschieberichtung des Riegelelements)
- 4: Riegelelement
- 5: Ausnehmung
- 6: Blechstruktur
- 7: Wulst
- 8, 8': Flächenseiten (der Blechstruktur)
- 9, 9': Wulstsegment
- 10: Oberwerkzeug
- 11: Unterwerkzeug
- 12: Blechzuschnitt
- 13, 13': Stanzstempel
- 14, 14': Pfeil (Verschieberichtung der Stanzstempel)
- 15, 15': Nut

- d: Wanddicke des Blechzuschnitts
- D: Wanddicke im Bereich des Wulstes
- B: Breite des Wulstes

## Patentansprüche

1. Verstelleinrichtung (2) für einen Fahrzeugsitz, umfassend eine Blechstruktur (6) mit mindestens einer Ausnehmung (5), welche mit einem Riegelelement (4) in formschlüssigen Eingriff bringbar ist, wobei die Ausnehmung (5) mit einem zumindest partiell umlaufenden Wulst (7) versehen ist, **dadurch gekennzeichnet, dass** sich der Wulst (7) über beide Flächenseiten (8, 8') der Blechstruktur (6) erstreckt und aus dem Werkstoff der Blechstruktur plastisch ausgeformt ist, wobei die Blechstruktur (6) eine insbesondere lineare Folge von Ausnehmungen (5) aufweist.

2. Verstelleinrichtung nach Anspruch 1, **dadurch gekennzeichnet, dass** der Wulst (7) die Ausnehmung (5) vollumfänglich umgibt.

3. Verstelleinrichtung nach einem der vorhergehenden Ansprüche, **dadurch gekennzeichnet dass** die Wanddicke (D) im Bereich des Wulstes (7) das 1,1fache bis 1,5fache, insbesondere etwa das 1,3fache der Wanddicke (d) der den Wulst (7) umgebenden Bereiche der Blechstruktur (6) beträgt.

4. Verstelleinrichtung nach einem der vorhergehenden Ansprüche, **dadurch gekennzeichnet, dass** die Breite (b) des Wulstes (7) das 0,25fache bis 1,0fache, insbesondere etwa das 0,5fache der Wanddicke (d) der den Wulst (7) umgebenden Bereiche der Blechstruktur (6) beträgt.

5. Verstelleinrichtung nach einem der vorhergehenden Ansprüche, **dadurch gekennzeichnet, dass** die Ausnehmung (5) eine im Wesentlichen rechteckige oder ovale Kontur aufweist.

6. Verstelleinrichtung nach Anspruch 5, **dadurch gekennzeichnet, dass** jeder Wulst (7) einer Ausnehmung (5) von dem Wulst der benachbarten Ausnehmung durch einen Bereich verringerter Wanddicke, insbesondere der Wanddicke (d), getrennt ist.

7. Verstelleinrichtung nach Anspruch 5 oder 6, **dadurch gekennzeichnet, dass** die Blechstruktur (6) einen Teil einer Sitzschiene, insbesondere einer Unterschiene (1), zur linearen Verstellung eines Fahrzeugsitzes bildet.

8. Verfahren zur Herstellung einer Verstelleinrichtung nach einem der vorhergehenden Ansprüche, **dadurch gekennzeichnet, dass** aus einem Blechzuschnitt (12) einer Blechstruktur (6) eine Ausnehmung (5) gestanzt und der Werkstoff des Blechzuschnitts (12) dabei plastisch zu einem Wulst (7) verformt wird, welcher sich über beide Flächenseiten (8, 8') der Blechstruktur (6) erstreckt und durch Einpressen des Werkstoffs in den Stanzstempel an beiden Flächenseiten umgebende Nuten erzeugt wird.

## Claims

1. An adjusting device (2) for a vehicle seat, comprising a sheet metal structure (6) with at least one recess (5) which can be brought into interlocking engagement with a locking element (4), whereas the recess (5) is provided with an at least partially encircling bead (7), **characterized in that** the bead (7) extends over both planar sides (8, 8') of the sheet metal structure (6) and that the bead (7) is plastically shaped from the material of the sheet metal structure, whereas the sheet metal structure (6) has an, in particular, linear sequence of recesses (5).

2. The adjusting device according to claim 1, **characterized in that** the bead (7) surrounds the entire circumference of the recess (5).

3. The adjusting device according to one of the preceding claims, **characterized in that** the wall thickness (D) in the region of the bead (7) is 1.1 times to 1.5 times, in particular approximately 1.3 times the wall thickness (d) of those regions of the sheet metal structure (6) which surround the bead (7).

4. The adjusting device according to one of the preceding claims, **characterized in that** the width (b) of the bead (7) is 0.25 times to 1.0 times, in particular approximately 0.5 times the wall thickness (d) of those regions of the sheet metal structure (6) which surround the bead (7).

5. The adjusting device according to one of the preceding claims, **characterized in that** the recess (5) has an essentially rectangular or oval contour.

6. The adjusting device according to claim 5, **characterized in that** each bead (7) of a recess (5) is separated from the bead of the adjacent recess by a region of reduced wall thickness, in particular the wall thickness (d).

7. The adjusting device according to claim 5 or 6, **characterized in that** the sheet metal structure (6) forms part of a seat rail, in particular a lower rail (1), for the linear adjustment of a vehicle seat.

8. Procedure for manufacturing an adjusting device according to one of the preceding claims, **characterized in that** a recess (5) is punched out of a sheet metal blank (12) of a sheet metal structure (6), whereas the material of the sheet metal blank (12) is thereby plastically deformed to a bead (7), which extends over both planar sides (8, 8') of the sheet metal structure (6), and that surrounding grooves are made on both planar sides by pressing the material into the punch.

## Revendications

1. Dispositif de réglage (2) pour un siège de véhicule, comprenant une structure en tôle (6) avec au moins un évidement (5), lequel peut être amené en saisie par correspondance de forme avec un élément de verrouillage (4), ledit évidement (5) présentant un renflement (7) au moins partiellement périphérique, **caractérisé en ce que** ledit renflement (7) s'étend sur les deux faces latérales (8, 8') de la structure en tôle (6) et est formé plastiquement dans le même matériau que la structure en tôle, ladite structure en tôle (6) présentant une suite notamment linéaire d'évidements (5).

2. Dispositif de réglage selon la revendication 1, **caractérisé en ce que** le renflement (7) entoure l'évidement (5) sur toute la périphérie de celui-ci.

3. Dispositif de réglage selon l'une des revendications précédentes, **caractérisé en ce que** l'épaisseur de paroi (D) est au niveau du renflement (7) égale à 1,1 fois à 1,5 fois, en particulier égale à environ 1,3 fois l'épaisseur de paroi (d) des parties de la structure en tôle (6) qui entourent le renflement (7).

4. Dispositif de réglage selon l'une des revendications précédentes, **caractérisé en ce que** la largeur (b) du renflement (7) est égale à 0,25 fois à 1,0 fois, en particulier à environ 0,5 fois l'épaisseur de paroi (d) des parties de la structure en tôle (6) qui entourent le renflement (7).

5. Dispositif de réglage selon l'une des revendications précédentes, **caractérisé en ce que** l'évidement (5) présente un contour sensiblement rectangulaire ou ovale.

6. Dispositif de réglage selon la revendication 5, **caractérisé en ce que** chaque renflement (7) d'un évidement (5) est séparé du renflement de l'évidement voisin par une zone d'épaisseur de paroi réduite, égale en particulier à l'épaisseur de paroi (d).

7. Dispositif de réglage selon la revendication 5 ou la revendication 6, **caractérisé en ce que** la structure en tôle (6) forme une pièce d'un rail de siège, en particulier d'un rail inférieur (1), pour le réglage linéaire d'un siège de véhicule.

8. Procédé de fabrication d'un dispositif de réglage selon l'une des revendications précédentes, **caractérisé en ce qu'**un évidement (5) est découpé dans une pièce de tôle (12) d'une structure en tôle (6), et **en ce que** le matériau de la pièce de tôle (12) est plastiquement déformé en renflements (7) qui s'étendent sur les deux faces latérales (8, 8') de la structure en tôle (6) et sont générés par compression du matériau dans des rainures entourant le poinçon sur les deux faces latérales.
